# FASCICULE DE BREVET EUROPEEN

(11) **EP 2 467 249 B1**
(45) Date de publication et mention de la délivrance du brevet: **02.10.2013**
(21) Numéro de dépôt: 10744572.8
(22) Date de dépôt: 17.08.2010
(51) Int. Cl.: B29C 70/34, B29C 35/02, B29C 70/54, B29C 73/00

(54) **PROCÉDÉ DE FABRICATION DE PIÈCES COMPOSITES PERMETTANT UNE RÉPARABILITÉ DESDITES PIÈCES**
VERFAHREN ZUR HERSTELLUNG VON REPARATURFÄHIGEN VERBUNDTEILEN
PROCESS FOR MANUFACTURING COMPOSITE PARTS, ALLOWING SAID PARTS TO BE REPAIRED

(30) Priorité: 18.08.2009 FR 0955699
(43) Date de publication de la demande: 27.06.2012
(73) Titulaire: European Aeronautic Defence And Space Company Eads France, 75016 Paris (FR)
(72) Inventeur: CINQUIN, Jacques, F-91430 Igny (FR); VOILLAUME, Hubert, F-92130 Issy Les Moulineaux (FR)
(74) Mandataire: Cornuejols, Christophe
(86) Numéro de dépôt international: PCT/EP2010/061921
(87) Numéro de publication internationale: WO 2011/020821

(56) Documents cités:
- EP-A2- 1 151 850
- WO-A1-2010/039665
- US-B1- 6 432 236
- FRAME, B.J. ET AL.: "Results of Electron Beam Prepreg Debulking Study", SAMPE 2002, no. P02-112786, 12 mai 2002 (2002-05-12), XP002581221, Long Beach, CA, USA

## Description

### Domaine de l'invention

La présente invention relève du domaine des structures. Elle concerne plus particulièrement les structures réalisées en matériaux composites, et encore plus spécifiquement la réparation de ces structures.

On rappelle préalablement que les structures composites sont généralement réalisées par superposition de nappes ou de tissus minces de fibres (appelées plis), éventuellement orientées selon des directions différentes, et solidarisées par un matériau de liaison, typiquement une résine thermoplastique ou thermodurcissable.

Les matériaux composites sont de plus en plus couramment utilisés pour la réalisation de structures soumises à des contraintes mécaniques élevées, tout en devant rester le plus légères possible. En effet, ces structures composites permettent souvent une intégration plus forte des fonctions mécaniques, et une simplification des assemblages.

Leur utilisation est particulièrement courante dans le domaine aéronautique, pour lequel les contraintes de masse de l'appareil, et donc de consommation par passager et kilomètre, sont déterminantes pour la rentabilité de son exploitation, alors même que les contraintes de sécurité sont régulièrement renforcées.

On rappelle également que, parmi les grandes familles de matériaux composites, les matériaux composites à matrice en résine thermoplastique, qui peuvent aussi être renforcés avec des fibres courtes, sont mis en forme par chauffage au dessus d'une température seuil, et solidifient lors de leur refroidissement, cette solidification étant réversible.

Au contraire, les matériaux composites à matrice en résine thermodurcissable, usuellement associés à des fibres longues, et qui forment l'objet de la présente invention, sont mis en forme à basse température ou sous léger chauffage, puis leur configuration est figée par chauffage au dessus d'une température de polymérisation. La transformation est alors irréversible.

### Contexte de l'invention et problèmes posés

Parmi les divers types de pièces en matériaux composites, les pièces en matériau composite à matrice organique thermodurcissable sont sensibles aux impacts de relativement faible énergie comme les chutes d'outils pendant les opérations d'assemblage. La réparation de ces pièces en matériau composite thermodurcissable est toujours délicate à réaliser et peut dans certains cas ne pas être possible en fonction de la géométrie de la pièce.

Actuellement le besoin n'est pas satisfait complètement. Si la pièce est trop endommagée, elle est éliminée de la chaîne d'assemblage, et les efforts engagés pour sa fabrication (coûts matériaux, valeur ajoutée sur la fabrication de la pièce) sont perdus.

Les solutions les plus proches, connues de l'homme de l'art, sont des réparations par enlèvement de matière (usinage de la partie endommagée) puis stratification de préimprégné avec polymérisation du "patch" de réparation. Cette opération, ajoutée au processus de fabrication, entraîne un surcoût significatif, et les performances de la pièce traitée de la sorte, ne sont pas similaires à celles d'une pièce non endommagée. Elles présentent en particulier des discontinuités de performances mécaniques aux limites du "patch" ajouté pour effectuer la réparation.

L'enjeu de la réparation de pièces composites à matrice thermodurcissable est, comme on le comprend aisément, de diminuer les rebuts de fabrication, et de limiter les opérations de réparation pour les pièces composites fabriquées et qui sont stockées en attente d'assemblage final.

### Objectifs de l'invention

L'objectif de la présente invention est alors de répondre à une partie au moins des problèmes décrits ci-dessus.

### Exposé de l'invention

A cet effet, l'invention vise un procédé de fabrication de pièces composites de type à matrice thermodurcissable, ledit procédé comprenant une étape de polymérisation partielle, de l'ordre de 10 à 50% de la matrice de la pièce par chauffage, la pièce étant alors dite mi-cuite et destinée à être utilisée dans une étape de stockage ou une étape d'assemblage des pièces mi-cuites, avant une étape finale de polymérisation complète de la matrice par chauffage, ledit procédé comportant une étape de correction de délaminage local éventuel de la pièce.

Selon un mode de réalisation préféré, la correction de délaminage local comprend, si la pièce est réputée avoir subi un délaminage local en au moins une zone de sa surface, une étape de réchauffage local de la pièce dans au moins une des zones englobant chacune au moins une zone de délaminage réputé.

On comprend que le l'invention propose un concept de fabrication de pièces en matériaux composites à matrice organique thermodurcissable et fibres de renfort continues permettant de réparer les dommages éventuellement créés, cette réparation prenant place avant la cuisson finale de la pièce déterminant sa polymérisation non réversible.

Selon une mise en oeuvre avantageuse, lors de l'étape de réchauffage local de la pièce, une pression est appliquée à la pièce en composite mi-cuite, de manière à lui faire retrouver sa forme avant délaminage.

Selon une mise en oeuvre particulière du procédé, la pression appliquée est de l'ordre de grandeur de la pression initiale de fabrication de la pièce.

Selon une mise en oeuvre particulière du procédé, le temps de réchauffage local de la pièce est déterminé par utilisation d'un abaque prenant en compte notamment : des caractéristiques de la résine, des dimensions de la zone réputée délaminée de la pièce, et les taux de polymérisation : initial observé et final souhaité.

Selon une mise en oeuvre particulière du procédé, celui-ci comporte des étapes successives de correction de délaminage local de la pièce en des zones différentes de la pièce.

Selon une mise en oeuvre particulière du procédé, celui-ci comporte au moins une seconde phase de correction de délaminage local d'une même zone, cette zone étant réputée avoir été soumise à un second processus de délaminage local, la phase de réchauffage étant réalisée au dessus de la nouvelle température de transition vitreuse T_{g2} de la pièce composite, cette température étant notamment déterminée par le taux de polymérisation de la résine à l'issue de la précédente phase de correction de délaminage local.

On comprend qu'il s'agit d'un procédé qui permet des itérations dans la même zone si cela est nécessaire.

Avantageusement, le taux de polymérisation initial de la résine de la pièce mi-cuite est compris entre 20 et 50%.

L'invention vise également un produit programme d'ordinateur, destiné à aider à la mise en oeuvre du procédé tel qu'exposé, ledit produit programme d'ordinateur comprenant un ensemble d'instructions de code de programme adaptées, lorsqu'elles sont exécutées par un ordinateur, à proposer un temps de réchauffage local de la pièce composite à "réparer", ainsi qu'une pression à appliquer, éventuellement un profil de montée en température ou d'autres éléments tels que temps avant démoulage de la pièce après traitement etc., sur la base d'informations comprenant par exemple mais non limitativement : le type de composite utilisé (fibres et résine), les dimensions de la pièce et de la zone réputée délaminée, éventuellement des informations de pression, de température de chauffage et de temps de cuisson appliqués lors de la première cuisson de la pièce mi-cuite.

Avantageusement, ce produit programme d'ordinateur comporte au moins deux modes de calcul : dans un premier mode, les paramètres de température et de temps de chauffage sont calculés pour obtenir une cuisson complète de la pièce réparée, dans un second mode au contraire, ces paramètres sont déterminés pour permettre une polymérisation partielle, au minimum suffisante pour obtenir une annulation du délaminage local précédemment observé.

### Brève description des figures

La description qui va suivre, donnée uniquement à titre d'exemple d'un mode de réalisation de l'invention, est faite en se référant aux figures annexées dans lesquelles :

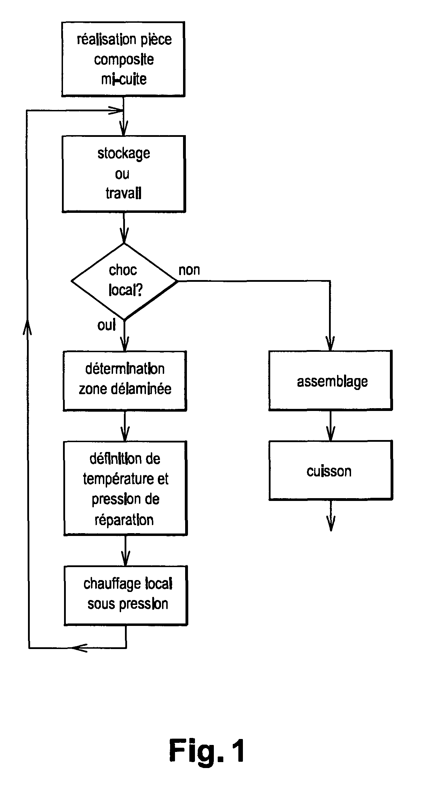

La figure 1 est un organigramme des étapes du procédé tel que décrit.

### Description détaillée d'un mode de réalisation de l'invention

La solution proposée utilise le concept de mi cuisson, connu en soi, pour la fabrication de pièces composites.

Un procédé de fabrication de pièces mi-cuites est décrit dans le document demande de brevet FR 2 922 811 "Procédé de réalisation d'une pièce de structure comprenant une matrice en résine thermodurcissable" (Airbus 2007). EP-A-1151850 décrit les charactéristiques de la préambule de la revendication 1.

On rappelle ici que ce procédé de mi-cuisson s'applique à des pièces composites utilisant une matrice en résine thermodurcissable. Une telle résine comporte des molécules monomères, qui se transforment en polymères sous l'action d'un apport d'énergie extérieur, formant ainsi un réseau macromoléculaire tridimensionnel, entraînant une solidification progressive de la résine.

Dans ce procédé, une préforme est préalablement créée, par exemple par drapage d'une superposition de tissus ou de nappes de fibres pré-imprégnées d'une résine thermodurcissable. Puis cette préforme est partiellement polymérisée (opération dite de réticulation ou de maturation), par exemple avec un taux de polymérisation de la résine de 20 à 50%. Une telle polymérisation partielle est réalisée par chauffage réalisé pendant un temps court. A titre d'information, la température de chauffage est de l'ordre de généralement autour de 100°C à 180°C, selon les résines utilisées.

On comprend que cette polymérisation partielle crée des liaisons chimiques entre des molécules formant la résine thermodurcissable, provoquant un durcissement préliminaire de la préforme, tout en laissant suffisamment de molécules non modifiées pour autoriser la déformation de la pièce. Une telle pièce est alors dite mi-cuite ("semi-cured" en langue anglo-saxonne).

Il est notable que, suite à cette polymérisation partielle de la résine, sa température de transition vitreuse T_{g} devient plus élevée qu'en l'absence de polymérisation partielle, et peut être rendue supérieure par exemple à la température ambiante d'un atelier, selon le taux de polymérisation obtenu.

De ce fait, cette polymérisation partielle permet, au moins, de réduire considérablement la vitesse de polymérisation naturelle à température ambiante d'une pièce utilisant une résine thermodurcissable, et permet donc son stockage pendant une durée bien plus longue qu'une pièce non mi-cuite.

On comprend que lors d'une nouvelle phase de chauffage de la pièce, la viscosité de la résine commence par diminuer (résine plus fluide) pour atteindre une valeur minimale lorsqu'on atteint la température de transition vitreuse T_{g} de la résine, puis augmente progressivement au fur et à mesure de la polymérisation de la résine, jusqu'à une solidification complète.

Le procédé tel que décrit dans le cadre de la présente invention, utilise ce principe de pièces semi-cuites, et est destiné à être mis en oeuvre par exemple dans un atelier de préparation de pièces composites.

On considère donc que, dans une phase préliminaire, des pièces composites mi-cuites utilisant une résine thermodurcissable, ont été réalisées par le procédé qui vient d'être décrit, procédé dont les paramètres précis de mise en oeuvre dépendent du matériau utilisé, et sortent, en tant que tels, du cadre de la présente invention.

Ces pièces sont alors, soit stockées à température ambiante, c'est à dire autour de 20°C sous une hygrométrie normale entre 30% et 70% par exemple, soit travaillées, par exemple par formage par emboutissage autour de la température de transition vitreuse T_{g} de la résine, en vue de leur assemblage dans une structure plus large.

On suppose qu'une telle pièce est alors soumise à un choc, dû par exemple à la chute d'un outil, tel qu'un marteau, sur sa surface. Ce choc est supposé suffisamment faible en intensité pour ne pas provoquer de cassure de la pièce, mais seulement un délaminage local des nappes de fibres pré-imprégnées dans la zone de l'impact. Il est clair que le phénomène de délaminage va se produire sur une zone dont les dimensions dépendent de plusieurs paramètres, dont l'intensité du choc, l'épaisseur de la pièce etc.

On suppose, pour la suite de cette description, que le diamètre de la zone de délaminage est déterminé, par contrôle visuel, par un moyen d'imagerie connu en soi, ou par tout autre moyen de contrôle non destructif, permettant de connaître l'état interne de la pièce.

La phase suivante du procédé est alors un retour d'une zone englobant la zone réputée délaminée au dessus de la température de transition vitreuse T_{g} de la résine dans la pièce mi-cuite, en appliquant une pression à la pièce en composite mi-cuite, de manière à lui faire retrouver sa forme initiale avant délaminage.

Le procédé est donc mis en oeuvre sur des presses chauffantes.

Dans cette étape, la pièce est par exemple pressée entre deux éléments rigides dont l'entrefer est dimensionné en fonction de l'épaisseur de la pièce. La pression à appliquer est de l'ordre de grandeur de la pression initiale de fabrication de la pièce. Elle est en tout état de cause choisie de manière à éviter les phénomènes d'essorage, dans lesquels la résine est expulsée des nappes de fibres. Elle dépend par ailleurs du taux de polymérisation de la pièce mi-cuite, un taux plus élevé nécessitant une pression supérieure. A titre purement informatif, une pression typique est de l'ordre de quelques bars.

Dans le même temps, la température est élevée par un moyen de chauffage de type connu de l'homme de l'art, dans le présent exemple jusqu'à une valeur située entre la température de transition vitreuse Tg de la pièce mi cuite et la température finale de polymérisation à appliquer pour terminer la polymérisation de la pièce mi cuite.

Dans ces conditions, une partie non encore polymérisée de la résine dans la zone réputée délaminée polymérise progressivement au cours du temps, et la création de molécules polymères, à partir des monomères situés dans différentes nappes de la pièce composite, créé des liaisons chimiques entre ces nappes. Ce phénomène contrecarre ainsi le délaminage créé entre ces nappes par le choc sur la pièce, et résulte ainsi en une "réparation" de la pièce composite.

Le temps de chauffage sous pression de la pièce dépend des caractéristiques de la résine, des dimensions de la zone réputée délaminée et des taux de polymérisation : initial observé et final souhaité. Il peut être de l'ordre de quelques minutes pour obtenir un taux de polymérisation final de la zone délaminée d'environ 60%.

Ce temps de réchauffage local de la pièce peut être déterminé par exemple en utilisant un abaque mémorisé sur ordinateur, par simple entrée de quelques paramètres par des opérateurs chargés de la réparation de la pièce.

Le profil de montée en température et en pression est de type classique pour ce genre de pièce composite.

Il est clair que des zones différentes de la pièce peuvent être ainsi traitées les unes après les autres si nécessaire.

Après mise en oeuvre du traitement, la nouvelle température de transition vitreuse T_{g2} de la pièce composite "réparée" est supérieure à la température de transition vitreuse T_{g} de la pièce mi-cuite avant traitement. Eventuellement, une même zone peut alors être traitée une seconde fois par le même procédé.

Le concept peut, en effet, être étendu au cas où le matériau composite formant la pièce est utilisé dans un état de polymérisation lui permettant une polymérisation complémentaire de réparation en utilisant alors un nouveau cycle de chauffage local sous pression à une température supérieure à la nouvelle température de transition vitreuse T_{g2}, et donc supérieure à la première température de polymérisation.

On comprend que plus généralement, tant qu'il reste des molécules non polymérisées dans la pièce composite, ces molécules peuvent encore contribuer à "coller" entre elles par polymérisation, des épaisseurs délaminées de fibres.

Par la suite, la pièce mi-cuite réparée peut être utilisée de façon classique, par exemple assemblée avec d'autres éléments en composite, puis complètement polymérisée par une phase de cuisson sous pression connue en soi.

Une fois définitivement figée après cuisson, la pièce obtenue comporte moins de liaisons tridimensionnelles dans la résine qu'une pièce qui n'aurait pas subi de choc et de délaminage, mais est plus homogène qu'une pièce réparée par la technique précédemment connue d'enlèvement de matière et de collage d'un "patch" de remplissage. La pièce composite, ainsi réparée par le procédé tel que décrit ci-dessus, présente en particulier moins de discontinuités de comportement mécanique aux limites de la zone de délaminage.

### Avantages de l'invention

Les avantages de cette solution sont de permettre la réparation des zones endommagées sans ajouter de procédure complémentaire dans le procédé de fabrication de la pièce.

Les ateliers de production utilisant la technologie du formage mi-cuit sont susceptibles d'utiliser cette invention en cas d'impact sur la pièce mi cuite avant polymérisation finale. Ils pourraient ainsi réparer les dommages créés par l'impact et éviter de mettre la pièce en rebut et ainsi éviter de perdre toute la valeur ajoutée et le coût matière de la pièce.

En utilisant ce procédé de "réparation", on améliore la rentabilité d'une chaîne de production en réduisant les coûts lies aux rebuts de fabrication.

### Variantes de l'invention

La portée de la présente invention ne se limite pas aux détails des formes de réalisation ci-dessus considérées à titre d'exemple, mais s'étend au contraire aux modifications à la portée de l'homme de l'art.

On note par exemple que le procédé tel que décrit peut être utilisé sur une pièce mi-cuite fabriquée par la technologie d'injection sur préforme fibreuse mais également sur des pièces mi-cuites réalisées à partir de pré-imprégnés drapés.

Le procédé tel qu'il a été exposé peut être assisté par ordinateur. Dans ce cas, des opérateurs chargés de la réparation des pièces doivent entrer, dans une base de données ad hoc, des informations comprenant par exemple mais non limitativement : le type de matériau utilisé (fibres et résine), les dimensions de la pièce et de la zone réputée délaminée, éventuellement des informations de pression, de température de chauffage et de temps de cuisson appliqués lors de la première cuisson de la pièce mi-cuite.

L'objectif du logiciel utilisé est alors de proposer un temps de réchauffage local de la pièce à réparer, ainsi qu'une température de chauffage, une pression à appliquer, éventuellement un profil de montée en température ou d'autres éléments tels que temps avant démoulage de la pièce après traitement etc.

Ces paramètres peuvent être calculés soit pour obtenir une cuisson complète de la pièce réparée, soit au contraire pour permettre de nouvelles réparations futures si besoin était, auquel cas une polymérisation partielle sera recherchée, celle-ci devant alors être au minimum suffisante pour obtenir une annulation du délaminage local précédemment observé.

On comprend que ce logiciel peut également déterminer les paramètres d'une seconde phase de correction de délaminage en une même zone.

## Revendications

1. Procédé de fabrication de pièces composites de type à matrice thermodurcissable, ledit procédé comprenant une étape de polymérisation partielle, de l'ordre de 10 à 50% de la matrice de la pièce par chauffage, la pièce étant alors dite mi-cuite et destinée à être utilisée dans une étape de stockage ou une étape d'assemblage des pièces mi-cuites, avant une étape finale de polymérisation complète de la matrice par chauffage,
**caractérisé en ce qu'**il comporte une étape de correction de délaminage local de la pièce, comprenant, si la pièce est réputée avoir subi un délaminage local en au moins une zone de sa surface, une étape de réchauffage local de la pièce au dessus de la température de transition vitreuse T_{g} de la pièce mi-cuite, dans au moins une des zones englobant chacune au moins une zone de délaminage réputé.

2. Procédé selon la revendication 1, **caractérisé en ce que**, lors de l'étape de réchauffage local de la pièce, une pression est appliquée à la pièce en composite mi-cuite, de manière à lui faire retrouver sa forme avant délaminage.

3. Procédé selon la revendication 2, **caractérisé en ce que** la pression appliquée est de l'ordre de grandeur de la pression initiale de fabrication de la pièce.

4. Procédé selon l'une quelconque des revendications 1 à 3, **caractérisé en ce que** le temps de réchauffage local de la pièce est déterminé par utilisation d'un abaque prenant en compte notamment : des caractéristiques de la résine, des dimensions de la zone réputée délaminée de la pièce, et les taux de polymérisation : initial observé et final souhaité.

5. Procédé selon l'une quelconque des revendications précédentes, **caractérisé en ce qu'**il comporte des étapes successives de correction de délaminage local de la pièce en des zones différentes de la pièce.

6. Procédé selon l'une quelconque des revendications 1 à 5, **caractérisé en ce qu'**il comporte au moins une seconde phase de correction de délaminage local d'une même zone, cette zone étant réputée avoir été soumise à un second processus de délaminage local, la phase de réchauffage étant réalisée au dessus de la nouvelle température de transition vitreuse T_{g2} de la pièce composite, cette température étant notamment déterminée par le taux de polymérisation de la résine à l'issue de la précédente phase de correction de délaminage local.

7. Procédé selon la revendication 1, **caractérisé en ce que** le taux de polymérisation initial de la résine de la pièce mi-cuite est compris entre 20 et 50%.

8. Produit programme d'ordinateur, destiné à aider à la mise en oeuvre du procédé selon l'une quelconque des revendications précédentes, ledit produit programme d'ordinateur comprenant un ensemble d'instructions de code de programme adaptées, lorsqu'elles sont exécutées par un ordinateur, à proposer un temps de réchauffage local de la pièce composite à "réparer", une température de chauffage, sur la base d'informations comprenant par exemple mais non limitativement : le type de composite utilisé, les dimensions de la pièce et de la zone réputée délaminée, éventuellement des informations de pression, de température de chauffage et de temps de cuisson appliqués lors de la première cuisson de la pièce mi-cuite.

9. Produit programme d'ordinateur selon la revendication 8, **caractérisé en ce qu'**il comporte au moins deux modes de calcul : dans un premier mode, les paramètres de température et de temps de chauffage sont calculés pour obtenir une cuisson complète de la pièce réparée, dans un second mode au contraire, ces paramètres sont déterminés pour permettre une polymérisation partielle, au minimum suffisante pour obtenir une annulation du délaminage local précédemment observé.

## Patentansprüche

1. Verfahren zur Herstellung von Verbundwerkstoffteilen mit einer wärmehärtenden Matrix, wobei das besagte Verfahren einen Schritt einer teilweisen Polymerisation in der Größenordnung von 10 bis 50% der Matrix des Teiles durch Erwärmen umfasst, und das Teil somit halbgehärtetes Teil genannt wird, und dazu bestimmt ist, vor einem letzten Schritt der vollständigen Polymerisation der Matrix durch Erwärmen in einem Lagerungsschritt oder in einem Montageschritt der halbgehärteten Teile verwendet zu werden,
**dadurch gekennzeichnet, dass** es einen Schritt zur Korrektur einer lokalen Delamination des Teiles umfasst, der, wenn das Teil im Ruf steht, eine lokale Delamination in zumindest einem Bereich seiner Oberfläche erfahren zu haben, einen Schritt der erneuten lokalen Erwärmung des Teils über die Glasübergangstemperatur T_{g} des halbgehärteten Teils in zumindest einem der Bereiche umfasst, die jeweils zumindest einen Delaminationsbereich enthalten.

2. Verfahren nach Anspruch 1, **dadurch gekennzeichnet, dass** beim Schritt der erneuten lokalen Erwärmung des Teiles ein Druck auf das halbgehärtete Teil aus Verbundwerkstoff ausgeübt wird, sodass es erneut seine Form vor der Delamination einnimmt.

3. Verfahren nach Anspruch 2, **dadurch gekennzeichnet, dass** der angewandte Druck in der Größenordnung des bei der Herstellung des Teils angewandten ursprünglichen Drucks liegt.

4. Verfahren nach irgendeinem der Ansprüche 1 bis 3, **dadurch gekennzeichnet, dass** die Dauer der erneuten lokalen Erwärmung des Teiles durch die Verwendung eines Diagrammes bestimmt wird, in dem vor allem folgendes berücksichtigt wird: Merkmale des Harzes, Abmessungen des Delaminationsbereiches des Teiles, und die Polymerisationsrate: die ursprünglich beobachtete und letztendlich erwünschte.

5. Verfahren nach irgendeinem der vorherigen Ansprüche, **dadurch gekennzeichnet, dass** es aufeinanderfolgende Schritte zur Korrektur der lokalen Delamination des Teiles in den verschiedenen Bereichen des Teiles umfasst.

6. Verfahren nach irgendeinem der Ansprüche 1 bis 5, **dadurch gekennzeichnet, dass** es zumindest eine zweite Phase der Korrektur einer lokalen Delamination eines selben Bereiches umfasst, wobei dieser Bereich im Ruf steht, einem zweiten Prozess einer lokalen Delamination unterworfen zu sein, und die Phase der erneuten Erwärmung über der neuen Glasübergangstemperatur T_{g2} des Verbundwerkstoffteiles liegt, und diese Temperatur vor allem durch die Polymerisationsrate des Harzes am Ende der vorhergehenden Phase zur Korrektur der lokalen Delamination bestimmt wird.

7. Verfahren nach Anspruch 1, **dadurch gekennzeichnet, dass** die ursprüngliche Polymerisationsrate des Harzes des halbgehärteten Teiles zwischen 20 und 50% liegt.

8. Computerprogrammprodukt, das dazu bestimmt ist, die Umsetzung des Verfahrens nach irgendeinem der vorherigen Ansprüche zu unterstützen, und das besagte Computerprogrammprodukt eine bestimmte Anzahl an Programmcodeanweisungen umfasst, die sich, wenn sie von einem Computer ausgeführt werden, dazu eignen, eine Dauer für die erneute lokale Erwärmung für das zu "reparierende" Verbundwerkstoffteil vorzuschlagen, eine Erwärmungstemperatur, die auf Informationen beruht, die ohne jedwede Einschränkung beispielsweise folgendes umfassen: den verwendeten Verbundwerkstofftyp, die Abmessungen des Teils und des Delaminationsbereichs, eventuell Informationen über den Druck, die Erwärmungstemperatur, und die Brenndauer, die beim ersten Brennen des halbgehärteten Teiles angewandt werden.

9. Computerprogrammprodukt nach Anspruch 8, **dadurch gekennzeichnet, dass** es zumindest zwei Berechnungsmodi umfasst: in einem ersten Modus werden die Parameter der Temperatur und der Erwärmungsdauer berechnet, um ein vollständiges Brennen des reparierten Teiles zu erhalten, in einem zweiten Modus werden diese Parameter im Gegensatz dazu bestimmt, um eine teilweise Polymerisation zu erzielen, die zumindest ausreichend ist, um eine Annullierung der lokalen Delamination zu erhalten, die zuvor beobachtet worden ist.

## Claims

1. A method of manufacturing thermosetting matrix composite objects, the said method including a step of partial polymerisation, around 10 to 50% of the matrix of the said object by heating, the object being then semi-boiled and intended to be used in a step of storage or a step of assembly of semi-boiled objects, before a final step of complete polymerisation of the matrix by heating, **characterised in that** it comprises a step of correction of local delamination of the object, including, if the object is reputed to have been subjected to a local delamination in at least one area of its surface, a step of local reheating of the object higher than the temperature of vitreous transition T_{g} of the semi-boiled object, in at least one of the areas encompassing at least on area of reputed delamination.

2. A method according to the claim 1, **characterised in that**, during the step of local reheating of the object, a pressure is applied to the semi-boiled composite object, in a way to make it get back to its form before delamination.

3. A method according to the claim 2, **characterised in that** the pressure applied is around the size of the initial pressure of the manufacturing of the object.

4. A method according to any one of the claims 1 to 3, **characterised in that** the local reheating time of the object is determined by the use of a abacus, taking into account particularly: the characteristics of the resin, the dimensions of the delaminated reputed area of the object, and the rates of polymerisation: observed original and desired final result.

5. A method according to any one of the previous claims, **characterised in that** it comprises successive steps of correction of local delamination of the object in different areas of the object.

6. A method according to any one of the claims 1 to 5, **characterised in that** it comprises at least one second phase of correction of local delamination of a same area, this area being reputed to have been subjected to a second process of local delamination, the reheating phase being achieved above the new temperature of vitreous transition T_{g2} of the composite object, this temperature being particularly determined by the rate of polymerisation of the resin at the end of the previous phase of correction of local delamination.

7. A method according to the claim 1, **characterised in that** the rate of initial polymerisation of the resin of the semi-boiled object is understood to be between 20 and 50%.

8. A computer program product, intended to help the implementation of the method according to any one of the previous claims, the said computer program product including a set of instructions of adapted program code, when they are executed by a computer, to propose a local reheating time of the composite object to "repair", a heating temperature, on the information base including, for example, but not exhaustively: the type of composite used, the dimensions of the object and the delaminated reputed area, possibly the information from pressure, heating temperature, and time of boiling applied during the first boiling of the semi-boiled object.

9. A computer program product according to the claim 8, **characterised in that** it comprises at least two methods of calculation: in a first method, the parameters of temperature and heating time are calculated to achieve a complete boiling of the repaired object, in a second method on the contrary, these parameters are determined to allow a partial polymerisation, as a minimum, sufficient to achieve a cancellation of the local delamination previously observed.
